# FASCICULE DE BREVET EUROPEEN

(11) **EP 2 119 140 B1**
(45) Date de publication et mention de la délivrance du brevet: **15.04.2015**
(21) Numéro de dépôt: 07871954.9
(22) Date de dépôt: 17.12.2007
(51) Int. Cl.: H04L 12/70

(54) **PROCEDE D'ACHEMINEMENT PAR UN ROUTEUR D'UN PAQUET DE DONNEES DANS UN RESEAU DE COMMUNICATION PAR PAQUETS SUPPORTE PAR UN RESEAU DE TRANSPORT**
VERFAHREN ZUR WEITERLEITUNG EINES DATENPAKETS DURCH EINEN ROUTER IN EINEM DURCH EIN TRANSPORTNETZWERK GESTÜTZTEN PAKETNETZWERK
METHOD FOR CONVEYING A DATA PACKET THROUGH A ROUTER IN A PACKET COMMUNICATION NETWORK SUPPORTED BY A TRANSPORT NETWORK

(30) Priorité: 09.01.2007 FR 0752589
(43) Date de publication de la demande: 18.11.2009
(73) Titulaire: Orange, 75015 Paris (FR)
(72) Inventeur: LE ROUX, Jean-Louis, F-22300 Lannion (FR); CALVIGNAC, Géraldine, F-22560 Trebeurden (FR)
(74) Mandataire: Lecomte, Isabelle
(86) Numéro de dépôt international: PCT/FR2007/052539
(87) Numéro de publication internationale: WO 2008/087319

(56) Documents cités:
- US-A- 5 850 505
- WEI WEI, QINGJI ZENG AND YUN WANG: "Multi-Layer Differentiated Integrated Survivability for Optical Internet" SPRINGER, vol. 8, no. 3, novembre 2004 (2004-11), XP002447998
- ANDREAS KIRSTAEDTER SIEMENS ACHIM AUTENRIETH MUNICH UNIVERSITY OF TECHNOLOGY: "An Extended QoS Architecture Supporting Differentiated Resilience Requirements of IP Services" IETF STANDARD-WORKING-DRAFT, INTERNET ENGINEERING TASK FORCE, IETF, CH, juillet 2000 (2000-07), XP015030940 ISSN: 0000-0004
- KEN OWENS (ERLANG TECHNOLOGY) VISHAL SHARMA (METANOIA ET AL: "Network Survivability Considerations for Traffic Engineered IP Networks" IETF STANDARD-WORKING-DRAFT, INTERNET ENGINEERING TASK FORCE, IETF, CH, no. 2, mai 2002 (2002-05), XP015033613 ISSN: 0000-0004

## Description

L'invention concerne une technique d'acheminement par un routeur d'un paquet de données dans un réseau de communication par paquets supporté par un réseau de transport.

Plus précisément, la présente invention s'applique au cas d'un réseau architecturé selon un modèle dit à superposition de couches, "multilayer" en anglais, où un réseau de communication par paquets, par exemple le réseau IP, est supporté par un réseau de transport. Le réseau de transport peut être de type SDH, pour "Synchronous Digital Hierarchy", ou optique, par exemple par multiplexage de longueurs d'onde WDM, pour "Wavelength Division Multiplexing". Le réseau de transport assure des connexions qui sont vues du réseau de communication par paquets comme étant point à point. Le réseau de communication par paquets agit vis-à-vis du réseau de transport comme un client. De plus, le protocole de routage dans le réseau de communication par paquets et celui dans le réseau de transport sont indépendants.

On prévoit généralement dans le réseau de transport des mécanismes de sécurisation de liens différenciés. Ces mécanismes se distinguent par le temps nécessaire au ré-établissement en cas de panne et par la bande passante consommée pour assurer la sécurisation du lien du réseau de transport. Plus les mécanismes ré-acheminent le trafic rapidement suite à une panne, plus ils consomment de ressources. A titre d'exemple, on peut citer des mécanismes de sécurisation:
- de type Protection 1+1, c'est-à-dire que le trafic est transmis simultanément sur deux liens en parallèle,
- de type Protection N:1, c'est-à-dire que N liens partagent un lien de secours et acheminent leur trafic sur ce lien en cas de panne,
- de type Restauration, c'est-à-dire qu'en cas de panne, le réseau tente d'établir le plus rapidement possible un nouveau chemin.

L'ensemble du trafic entre deux routeurs est acheminé par un lien ou par plusieurs liens suivant le niveau de sécurisation dans le réseau de transport.

Or, ce trafic se décompose en une pluralité de flots dont les besoins respectifs de sécurisation sont différents. Un flot est caractérisé par un certain nombre de caractéristiques communes à plusieurs paquets. Ces caractéristiques, ou éléments d'identification, peuvent être présentes dans différentes couches du modèle OSI pour Open System Interconnection model en anglais. Elles peuvent correspondre aux contenus des champs d'adresses source et/ou destination (couche 3), ou de tout autre champ dans l'entête des paquets, notamment le type de protocole (couche 3) et les numéros de port dans le cas des segments TCP ou UDP (couche 4). Certains flots nécessitent un niveau de sécurisation très élevé, par exemple des flots liés à des applications temps réel nécessitant des temps de coupure inférieurs à des valeurs de l'ordre de 100 millisecondes, alors que d'autres flots sont plus tolérants aux coupures et ne nécessitent donc pas un niveau de sécurisation élevé. Actuellement, l'ensemble du trafic est sécurisé selon un même niveau et dans le cas où un niveau de sécurisation élevé est choisi dans le réseau de transport, ceci implique alors une consommation de ressources non justifiée pour sécuriser des flots qui auraient requis un niveau de sécurisation inférieur.

Dans le document intitulé "Recovery Time Analysis of Differentiated Resilience in MPLS" de A. Autenrieth, publié dans les actes de la conférence DRCN2003, une méthode de sécurisation des flots, notamment dans un réseau de commutation par étiquettes ou MPLS, est définie en fonction d'un paramètre représentatif du temps de récupération, nommé "Resilience Class" en anglais ou RC. A chaque valeur du paramètre RC correspond un niveau de sécurisation et donc une procédure de sécurisation dans le réseau MPLS adaptée au niveau de sécurisation requis. A titre d'exemple, pour des flots, à acheminer dans le réseau MPLS, nécessitant un niveau de sécurisation très élevé, noté RC1, c'est-à-dire un temps de ré-établissement inférieur à une valeur de l'ordre de 100 ms, on établit au préalable un chemin commuté par étiquette de secours dans lequel les flots correspondant à la valeur de paramètre RC1 seront acheminés en cas de panne du chemin principal. Ainsi, en cas de panne, le temps de récupération de l'acheminement de ces flots est inférieur à la valeur requise. Le document « An extended QoS Architecture Supporting Differentiated Resilience Requirements of IP Services », draft-kirstaedter-extqosarch-00.txt, de juillet 2000 définit une extension des architectures de qualité de service existantes afin de supporter des demandes de résistances différenciées pour les services IP.

Dans le document "Optical Layer Survivability: A services perspective" de O. Gerstel et R. Ramaswani, publié dans le journal "IEEE Communications Magazine" de mars 2000, les auteurs abordent le problème des réseaux architecturés selon un modèle dit à superposition de couches et identifient le besoin de coordination en cas de panne entre les mécanismes de sécurisation entre le réseau de communication par paquets en tant que client du réseau de transport et le réseau de transport. A cet effet, il définit cinq classes de services permettant de préciser quelle couche sécurise le flot afin d'éviter des interactions inefficaces entre les mécanismes de sécurisation. Toutefois, le réseau de transport n'est pas informé du niveau de sécurisation requis par le réseau de communication par paquets.

Le document « Multi-Layer Differentiated Integrated Survivability for Optical Internet » de W. Wei et al, publié dans le journal « Photonic Network Communications » décrit un algorithme dans lequel un chemin entre une source et une destination est défini en fonction d'un niveau de sécurisation, à un niveau de sécurisation étant associé une couche en charge de la protection.

Il existe donc un besoin d'une technique permettant de sécuriser du trafic de manière différenciée dans un réseau de transport en fonction de besoins définis par flots dans un réseau de communication par paquets dans une architecture selon un modèle de superposition de couches.

L'invention répond à ce besoin en proposant un procédé d'acheminement par un routeur d'un paquet de données dans un réseau de communication par paquets supporté par un réseau de transport, ledit procédé comprenant une étape de détermination à partir dudit paquet d'un niveau de sécurisation et d'un acheminement requis, caractérisé en ce qu'il comprend en outre :
- une étape préalable d'établissement d'une table mémorisant, pour un acheminement donné, des liens du réseau de transport aptes à assurer ledit acheminement et classés par niveau de sécurisation ;
- une étape de sélection dans la table, à partir du niveau de sécurisation et de l'acheminement requis, d'un lien dudit réseau de transport.

En fonction de l'acheminement requis pour le paquet, on consulte une table mémorisant, pour un acheminement donné et pour un niveau de sécurisation requis, au moins un lien physique du réseau de transport offrant ce niveau de sécurisation. Ainsi le tlot auquel appartient ce paquet est sécurisé dans le réseau de transport en fonction d'un niveau de sécurisation défini dans le réseau de communication par paquets. Ainsi, les ressources du réseau de transport sont utilisées de façon optimale. La consommation de ressources dans le réseau de transport est adaptée au niveau de sécurisation requis dans le réseau de communication par paquets. En outre, il n'y a pas d'interaction dommageable entre les mécanismes de sécurisation du réseau de transport et ceux du réseau de communication par paquets. Le niveau de sécurisation peut être défini de façon implicite dans le paquet par combinaison de différents champs. Il peut également s'agir d'un codage explicite ajouté lors de l'entrée du paquet dans le réseau à superposition de couches.

En outre, lors de l'étape d'établissement de la table, pour un acheminement donné à effectuer par le routeur dans le réseau de communication, le routeur détermine l'ensemble des liens du réseau de transport supportant ledit acheminement ainsi que les niveaux de sécurisation associés respectifs et associe dans la table à un niveau de sécurisation donné au moins un lien du réseau de transport correspondant.

Ainsi, on obtient une table mémorisant, pour un acheminement donné, pour un niveau de sécurisation donné, au moins un lien du réseau de transport apte à assurer cet acheminement et le niveau de sécurisation. Cette table est élaborée à l'initialisation et est adaptée à la configuration effective du réseau de transport. En effet, la table d'acheminement ou table de routage IP ne fournit des informations sur les liens logiques. La table, selon l'invention, est établie en partie par consultation de deux tables, l'une mémorisant pour chaque lien logique, au moins un lien du réseau de transport et l'autre table mémorisant pour un lien du réseau de transport un niveau de sécurisation.

Avantageusement, si aucun partage de charge n'est activé pour un niveau de sécurisation donné, l'étape d'établissement de tables comprend une étape de sélection aléatoire d'un lien dans le cas où le routeur a déterminé une pluralité de liens dans le réseau de transport.

Ainsi, notamment dans le cas d'un réseau de communication par paquets, le routeur n'a à sa disposition qu'un seul lien de sortie dans la table si le partage de charge n'est pas activé.

En outre, lorsque l'étape de détermination ne peut pas déterminer un niveau de sécurisation requis, on sélectionne au moins un lien du réseau de transport par défaut.

Ainsi, dans le cas où il n'est pas possible de déterminer à partir des informations disponibles dans le paquet un niveau de sécurisation requis, le trafic est correctement acheminé par utilisation de liens définis par défaut.

Avantageusement, le procédé comprend en outre lors d'une modification d'un acheminement, une étape de mise à jour de la table pour ledit acheminement.

Lors des événements affectant les tables d'acheminement du routeur, tels que des pannes, des messages d'annonces d'informations émis par les protocoles de contrôle de routage, la table est mise à jour afin d'être toujours adaptée à l'acheminement des paquets.

L'invention concerne également un routeur dans un réseau de communication par paquets supporté par un réseau de transport, comprenant :
- des moyens d'établissement d'une table, mémorisant pour un acheminement donné, des liens du réseau de transport aptes à assurer ledit acheminement et classés par niveau de sécurisation ;
- des moyens de détermination à partir d'un paquet d'un niveau de sécurisation et d'un acheminement requis ;
- des moyens de sélection dans la table à partir du niveau de sécurisation et de l'acheminement requis d'un lien dudit réseau de transport.

L'invention concerne en outre un système dans un réseau de communication par paquets supporté par un réseau de transport, comprenant au moins un routeur tel que décrit ci-dessus.

L'invention sera mieux comprise à l'aide de la description suivante de différents modes de réalisation particuliers du procédé d'acheminement de l'invention, en référence aux dessins annexés sur lesquels :
- la figure 1 représente un réseau de communication par paquets ;
- la figure 2 représente un exemple particulier d'enregistrement dans une table d'acheminement selon un premier mode particulier de réalisation de l'invention ;
- la figure 3 représente un schéma bloc fonctionnel d'un routeur pour la mise en oeuvre du premier mode particulier de réalisation du procédé de l'invention ;
- les figures 4 et 5 représentent un organigramme des étapes du procédé selon le premier mode particulier de réalisation de l'invention.

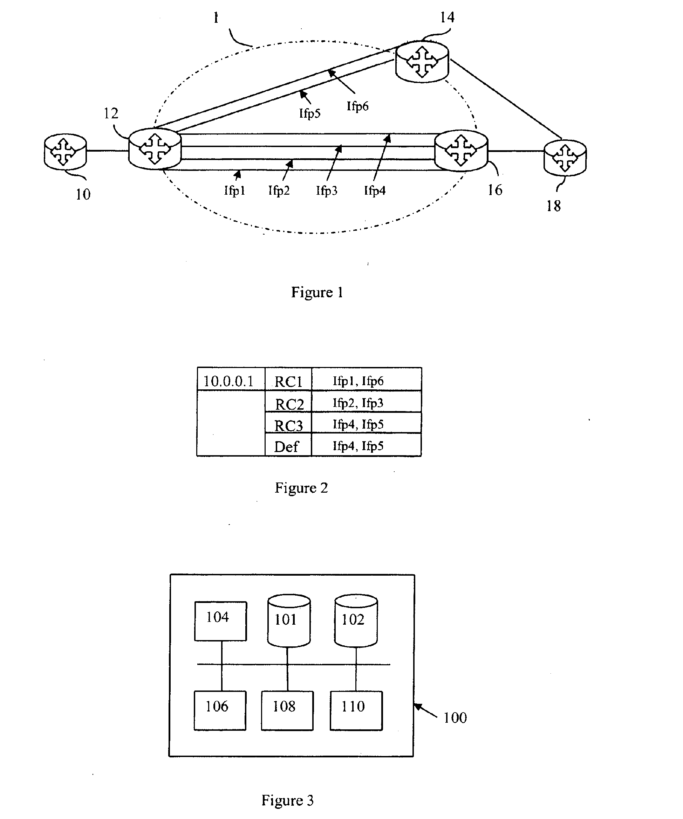

On a représenté sur la figure 1 un réseau de communication par paquets. On appelle "réseau de communication par paquets" un réseau qui assure le transfert de paquets porteurs d'informations ainsi que les fonctions de routage de ces paquets. Les paquets dont il est question dans l'exemple particulier de la présente description sont des paquets IP (pour "Internet Protocol"). Les fonctions de transfert et de routage sont assurées par des équipements appelés routeurs. Des routeurs 10, 12, 14, 16 et 18 sont représentés sur la figure 1. Une partie du réseau de communication par paquets, désignée par la référence 1 sur la figure 1, est supportée par un réseau de transport. Le réseau de transport est ici de type SDH, pour "Synchronous Digital Hierarchy". Il pourrait également s'agir d'un réseau de transport optique, par exemple par multiplexage de longueurs d'onde WDM, pour "Wavelength Division Multiplexing", ou de tout autre type. Dans le réseau de transport, les liens peuvent être configurés pour apporter un niveau de sécurisation particulier. Par le terme "lien", on entend désigner une connexion entre deux entités du réseau situées aux deux extrémités opposées du lien. On notera que ces deux entités peuvent être reliées entre elles par plusieurs liens différents du fait qu'ils empruntent des chemins respectifs différents dans le réseau de transport, c'est-à-dire des chemins physiques différents ou bien des chemins portés par des intervalles de temps différents, par exemple dans le cas d'un réseau de transport de type SDH. Cette partie 1 du réseau est architecturée selon un modèle dit à superposition de couches, "multilayer" en anglais. Le réseau de transport assure des connexions qui sont vues du réseau de communication par paquets comme étant point à point. Autrement dit, pour une connexion donnée dans le réseau de transport, le réseau de communication a la connaissance des routeurs situés aux deux extrémités de la connexion, mais il ne connaît pas les éventuelles entités du réseau de transport intermédiaires situées entre ces deux routeurs d'extrémité. Le réseau de communication par paquets agit vis-à-vis du réseau de transport comme un client. Il fournit des paquets au réseau de transport, qui se charge ensuite de les acheminer.

Plus précisément, les routeurs 12, 14 et 16 sont des routeurs d'entrée du réseau 1 architecture selon un modèle à superposition de couche.

On a représenté sur la figure 1 une pluralité de liens du réseau de transport. Quatre d'entre eux, référencés Ifp1 à Ifp4, relient les routeurs 12 et 16 et deux d'entre eux, référencés Ifp5 et Ifp6, relient les routeurs 12 et 14. Par souci de clarté, seuls les liens du réseau de transport nécessaires à la description sont représentés sur la figure 1. Dans l'exemple qui sera développé dans la suite de la description, on considère que :
- les liens Ifp1 et Ifp6 ont une sécurisation dans le réseau de transport de type Protection 1+1, c'est-à-dire que pour chacun de ces liens, le trafic est transmis sur le lien et simultanément sur un lien, non représenté, en parallèle,
- les liens Ifp2 et Ifp3 ont une sécurisation dans le réseau de transport de type Protection 1:1, c'est-à-dire que chacun de ces liens a un lien de secours, non représenté, respectif et achemine son trafic sur ce lien en cas de panne,
- les liens Ifp4 et Ifp5 ont une sécurisation dans le réseau de transport de type Restauration, c'est-à-dire qu'en cas de panne du lien Ifp4, respectivement Ifp5, le réseau tente d'établir le plus rapidement possible un nouveau lien entre les routeurs 12 et 14, respectivement entre les routeurs 12 et 16.

Selon l'invention, le routeur 12 comprend une table 101 des liens du réseau de transport, telle que représentée sur la figure 3, mémorisant pour chaque lien un niveau de sécurisation dans le réseau de transport. A titre d'exemple, si on définit les niveaux de sécurisation de telle sorte que le niveau de sécurisation 1 correspond à une sécurisation dans le réseau de transport de type Protection 1+1, le niveau 2 à une sécurisation de type Protection 1:1 et le niveau 3 à une sécurisation de type Restauration, alors dans l'exemple ci-dessus, les liens dans le réseau de transport Ifp1, Ifp2, Ifp3, Ifp4, Ifp5 et Ifp6 ont respectivement des niveaux de sécurisation 1, 2, 2, 3, 3, 1.

On se place dans le cas particulier où le routeur 10 doit acheminer des paquets de données à destination du routeur 18.

Dans l'exemple choisi ci-dessus, l'adresse de destination du routeur 18 est 10.0.0.1.

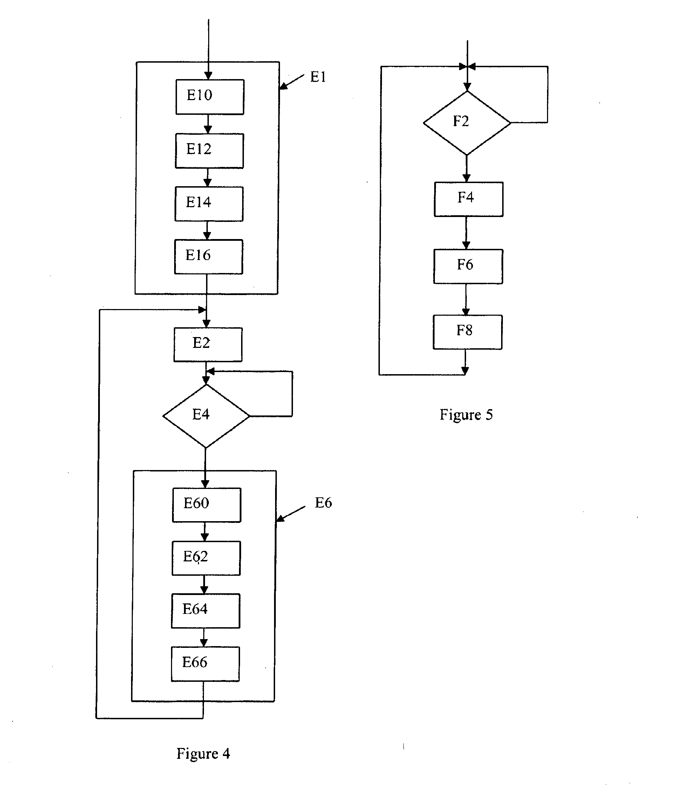

Nous allons maintenant décrire le procédé d'acheminement par un routeur 12 d'un paquet de données dans un réseau de communication par paquets supporté par un réseau de transport, tel qu'il s'exécute dans le routeur 12 en relation avec les figures 4 et 5.
La figure 4 décrit les étapes du procédé tel qu'il s'exécute dans le plan de commande du routeur 12.
La figure 5 décrit, quant à elle, les étapes du procédé tel qu'il s'exécute dans le plan de transfert du routeur 12.

Dans le plan de commande, le procédé commence par une première étape E1 d'établissement d'une table 102, telle que représentée sur la figure 3, mémorisant pour un acheminement donné, des liens Ifp1-Ifp6 du réseau de transport aptes à assurer cet acheminement et classés par niveau de sécurisation.

Cette première étape se décompose en quatre sous-étapes.

Dans une sous-étape E10, pour un acheminement donné à effectuer par le routeur dans le réseau de communication, c'est-à-dire pour une adresse de destination ou bien un groupe d'adresses de destination, le routeur 12 détermine à partir d'une table, dite "table d'acheminement" ou table de routage IP, un premier ensemble d'au moins un lien logique, un lien logique correspondant à un des plus courts chemins pour cet acheminement.

Le routeur 12 a en mémoire, pour chaque lien logique, au moins un lien du réseau de transport associé dans une table, dite table de faisceaux IP. A partir du lien logique déterminé, il détermine un second ensemble comprenant un ou plusieurs liens du réseau de transport supportant l'acheminement considéré.

A l'issue de cette sous-étape E10, le procédé passe à une sous-étape E12.

Pour chaque lien du second ensemble de liens dans le réseau de transport, le routeur 12 détermine, à partir de la table 101 des liens du réseau de transport, le niveau de sécurisation associé. Il associe alors à chaque lien du second ensemble de liens supportant l'acheminement considéré le niveau de sécurisation déterminé.

Le routeur 12 est configuré de façon à ce qu'un niveau de sécurisation dans le réseau de transport soit mis en correspondance avec un paramètre représentatif du temps de récupération, nommé "Resilience Class" en anglais ou RC. A titre d'exemple, on définit trois valeurs du paramètre RC:
- la valeur "RC1" correspond à un temps de récupération requis inférieur à cent millisecondes,
- la valeur "RC2" correspond à un temps de récupération requis compris entre cent millisecondes et une seconde,
- la valeur "RC3" correspond à un temps de récupération requis compris entre une et dix secondes.

Les niveaux de sécurisation "1", "2", "3" dans le réseau de transport sont respectivement mis en correspondance avec les valeurs "RC1", "RC2", "RC3" du paramètre RC.

Dans une sous-étape E14, pour chaque niveau de sécurisation, on extrait du second ensemble comprenant des liens du réseau de transport supportant l'acheminement considéré, un sous-ensemble d'un ou de plusieurs liens du réseau de transport assurant ce niveau de sécurisation et on mémorise ce sous-ensemble, comprenant au moins un lien du réseau de transport, dans la table 102. En d'autres termes, pour l'acheminement considéré, on classe les différents liens du réseau de transport par niveaux de sécurisation dans la table 102.

Puis, dans une sous-étape E16, on associe également à l'acheminement considéré un sous-ensemble de liens du réseau de transport permettant l'acheminement du trafic à utiliser par défaut, c'est-à-dire lorsque le niveau de sécurisation ne peut pas être déterminé ou lorsque pour un niveau de sécurisation donné, aucun lien du réseau de transport ne correspond à ce niveau.

Ainsi, à l'issue des étapes E14 et E16, l'acheminement considéré est associé dans la table 102 :
- à une pluralité de liens classés en sous-ensembles par niveaux de sécurisation respectifs RC1, RC2 et RC3, chaque niveau de sécurisation étant ainsi associé à un sous-ensemble d'au moins un lien, et
- à un sous-ensemble de liens par défaut, noté "Def', lorsque le niveau de sécurisation ne peut être déterminé.

Ces sous-étapes E10, E12, E14 et E16 sont réitérées pour l'ensemble des acheminements à effectuer par le routeur et contenus dans la table d'acheminement du routeur.

A l'issue de cette étape E1, on obtient une table 102 comprenant une pluralité d'enregistrements de même structure que celle de l'exemple particulier représenté sur la figure 2. Cet exemple correspond à l'enregistrement obtenu pour un acheminement de paquets IP vers l'adresse de destination 10.0.0.1 du routeur 18. Aux niveaux de sécurisation notés RC1, RC2 et RC3 sont associés respectivement les sous-ensembles de liens {Ifp1, Ifp6}, {Ifp2, Ifp3} et {If4, Ifp5}. Le sous-ensemble {Ifp4, Ifp5}, noté "Def', correspond au sous-ensemble de liens à utiliser par défaut.

De façon optionnelle, si aucun partage de charge n'est activé sur le routeur 12 pour un niveau de sécurisation donné, et dans le cas où il a déterminé une pluralité de liens, à la sous-étape E14, le routeur sélectionne de façon aléatoire un lien et mémorise ce lien dans la table 102.

Le procédé passe alors à une étape E2 de transfert de la table 102 du plan de commande au plan de transfert du routeur. Pour des raisons de lisibilité, une seule table est représentée sur la figure 3 pour les deux plans.

Le procédé passe ensuite à une étape E4 de supervision de modification dans la table d'acheminement.

Les modifications dans la table d'acheminement peuvent être générées par des pannes intervenant sur des liens, par des annonces d'informations émises par des protocoles de contrôle de routage, ...

Si lors de l'étape E4, le routeur 12 détecte qu'une modification a été apportée dans la table d'acheminement pour un ou plusieurs acheminements, autrement dit dans le mode de réalisation décrit ici pour une adresse de destination ou un groupe d'adresses de destination, le procédé passe alors à l'étape E6 de mise à jour de la table 102 pour cet ou ces acheminements. Dans le cas contraire, le procédé retourne à l'étape E4.

L'étape E6 s'exécute de façon équivalente à l'étape E1. Pour chaque acheminement modifié, on exécute des sous-étapes E60, E62, E64 et E66 dont l'exécution est respectivement identique aux étapes E10, E 12, E14 et E16.

A l'issue de l'étape E6, le procédé exécute à nouveau l'étape E2 de transfert de la table 102 du plan de commande au plan de transfert.

Nous allons maintenant décrire le procédé d'acheminement tel qu'il s'exécute dans le plan de transfert en référence à la figure 5.

Le routeur 12 est dans une étape F2 en attente de réception de paquets de données. Sur réception d'un paquet de données, le routeur 12 détermine dans une étape F4 un niveau de sécurisation requis à partir du paquet reçu. Le niveau de sécurisation peut être défini de façon implicite dans le paquet IP par combinaison de différents champs. Il peut également s'agir d'un codage explicite ajouté lors de l'entrée du paquet IP dans le réseau 1 à superposition de couches.

A titre d'exemples pour le codage implicite, le niveau de sécurisation requis peut être déduit par une mise en correspondance d'informations, contenues dans un ou plusieurs champs des entêtes TCP/IP, UDP/IP d'un paquet IP, avec un niveau de sécurisation requis :
- une combinaison de champs des entêtes, par exemple en fonction de la valeur du champ DSCP pour "Differentiated Service Code Point" et d'un numéro de port TCP.

A titre d'exemples pour le codage explicite, le niveau de sécurisation requis peut être déduit par une lecture directe d'un champ des entêtes TCP/IP, UDP/IP d'un paquet IP :
- le champ Flow Label IPv6,
- le champ TOS pour Type Of Service, qui comprend l'information DSCP et des bits non définis.

Le routeur 12 détermine également lors de l'étape F4 l'acheminement requis pour le paquet à partir de l'adresse IP de destination.

Dans l'exemple particulier décrit ici, il s'agit d'un paquet à destination du routeur 18, d'adresse 10.0.0.1 et dont le niveau de sécurisation requis est RC1.

Lors de l'étape F6 de sélection d'un lien du réseau de transport, le routeur 12 obtient par lecture de la table 102 à partir de l'acheminement requis et du niveau de sécurisation requis un sous-ensemble de liens du réseau de transport permettant l'acheminement du paquet et assurant le niveau de sécurisation requis. Dans l'exemple décrit ici, on obtient l'ensemble {Ifp1, Ifp6}. Si le partage de charge est activé et si le sous-ensemble comprend plus d'un lien, le routeur sélectionne un des liens par exemple à l'aide d'une fonction de hachage. Le routeur 12 envoie ensuite, dans une étape F8, le paquet sur le lien sélectionné.

Le procédé repasse ensuite à l'étape F2 en attente de réception de données.

Dans un deuxième mode de réalisation, le réseau 1 de communication par paquets supporté par un réseau de transport est un réseau de type MPLS, c'est-à-dire un réseau de commutation multi-protocole par étiquettes. Une étiquette est affectée à chaque paquet de données par un routeur d'entrée dans le réseau MPLS. Le routage du paquet MPLS par un routeur est réalisé ainsi dans le réseau MPLS en fonction de l'étiquette d'entrée du paquet dans le routeur et par utilisation d'une table d'acheminement, dite table de commutation par étiquettes. Autrement dit, le routeur détermine un acheminement du paquet MPLS en fonction de l'étiquette d'entrée de celui-ci.

Le procédé effectue l'ensemble des étapes E1, E2, E4 et E6 telles que décrites dans le premier mode de réalisation, notamment afin d'obtenir une première table 102 mémorisant pour un acheminement donné, c'est-à-dire pour une adresse de destination ou un groupe d'adresses de destination, des liens du réseau de transport aptes à assurer cet acheminement et classés par niveau de sécurisation.

En outre, le procédé effectue l'étape E1 telle que décrite dans le premier mode de réalisation pour chaque étiquette d'entrée prévue dans la table de commutation par étiquettes et on obtient à l'issue de cette étape, une deuxième table, non représentée sur la figure 3, comprenant pour une étiquette d'entrée, une étiquette de sortie et, pour chaque niveau de sécurisation, un sous-ensemble de liens du réseau de transport permettant l'acheminement du trafic.

De même, lors d'une modification de la table de commutation par étiquettes détectée lors de l'étape E4, le procédé effectue l'étape E6 pour chaque acheminement modifié.

L'étape E2 de transfert de la deuxième table dans le plan de transfert est inchangée.

A l'issue de ces étapes, le routeur 12 comprend deux tables d'acheminement dans les plans de commande et de transfert : la première table 102 pour l'acheminement des paquets IP, la deuxième table pour l'acheminement des paquets MPLS.

Dans le plan de transfert, lors de l'étape F4 de détermination d'un acheminement et d'un niveau de sécurisation requis, le routeur détermine l'acheminement requis en fonction de l'entête du paquet reçu.

S'il s'agit d'un paquet IP, l'acheminement requis est déterminé pour le paquet à partir de l'adresse IP de destination. Dans ce cas, l'étape F6 de sélection d'un lien du réseau de transport est effectuée telle que décrite dans le premier mode de réalisation par lecture de la première table 102. L'étape F8 est effectuée telle que décrite dans le premier mode de réalisation.

S'il s'agit d'un paquet MPLS, l'acheminement requis est déterminé à partir de l'étiquette d'entrée dans le paquet reçu. A l'étape F6 de sélection d'un lien du réseau de transport, le routeur obtient par lecture de la deuxième table la valeur de l'étiquette de sortie ainsi qu'un lien du réseau de transport permettant l'acheminement du paquet. Le routeur 12 modifie en outre dans le paquet, avant l'étape F8, l'étiquette permettant l'acheminement en la remplaçant par l'étiquette de sortie lue dans la deuxième table puis à l'étape F8, envoie le paquet sur le lien sélectionné.

Le niveau de sécurisation peut être défini de façon implicite dans le paquet MPLS par combinaison de différents champs. Il peut également s'agir d'un codage explicite ajouté lors de l'entrée du paquet MPLS dans le réseau 1 à superposition de couches.

En complément des exemples de codages implicites et explicites déjà décrits dans le premier mode de réalisation, le niveau de sécurisation requis peut être déduit par une mise en correspondance d'informations, contenues dans un ou plusieurs champs des entêtes TCP/IP, UDP/IP ou MPLS d'un paquet MPLS, avec un niveau de sécurisation requis, par exemple :
- par utilisation du champ EXP de l'entête MPLS ;
- par utilisation de bits du label MPLS.

Dans une première variante, lorsque le routeur 12 est un routeur d'entrée du réseau MPLS, la première table 102 mémorise également pour un acheminement donné, c'est-à-dire pour une adresse de destination ou un groupe d'adresses de destination, une étiquette de sortie ainsi que des liens du réseau de transport aptes à assurer cet acheminement et classés par niveau de sécurisation.

Dans une deuxième variante, lorsque le routeur 12 est un routeur de sortie du réseau MPLS, la deuxième table mémorise pour une étiquette d'entrée, et pour chaque niveau de sécurisation, un sous-ensemble de liens du réseau de transport permettant l'acheminement du trafic.

Dans un troisième mode de réalisation, le routeur 12 est un routeur d'entrée du réseau de communication par paquet 1 supporté par un réseau de transport et il est notamment en charge de l'aiguillage des données vers un tunnel permettant l'acheminement et respectant les critères de qualité de service.

Des tunnels LSP (pour Label Switched Path), comprenant une succession de routeurs, sont créés virtuellement dans le réseau pour acheminer des paquets depuis un routeur d'entrée jusqu'à un routeur de sortie ou de destination (destination finale ou simplement de transit), via des routeurs de transit. Ces tunnels sont pré-établis en fonction de critères de qualité de service. Un tunnel correspond à un chemin d'étiquettes. Le chemin explicite est indiqué dans l'entête MPLS et permet l'acheminement de bout en bout dans le réseau MPLS. Le routeur 12 détermine en fonction d'une adresse de destination et de critères de qualité de service contenus dans un paquet de données un tunnel permettant l'acheminement du paquet et respectant les critères de qualité de service. Les informations liées au tunnel sont ajoutées par le routeur d'entrée du réseau, par exemple le routeur 12.

L'acheminement requis est déterminé à partir de l'adresse de destination et de critères de qualité de service requis. A un acheminement et des critères de qualité de service sont associés un tunnel et une interface logique dans le réseau de communication par paquets.

Le procédé effectue l'étape E1 telle que décrite pour chaque couple (acheminement, critères de qualité de service) et on obtient à l'issue de cette étape, une table 102 comprenant pour un couple (acheminement, critères de qualité de service) et pour chaque niveau de sécurisation, un ensemble de tunnels permettant l'acheminement du trafic et respectant les critères de qualité de service.

La table 102 comprend pour un couple (acheminement, critères et qualité de service) et pour chaque niveau de sécurisation, un ou plusieurs tunnels associés. A un tunnel est associé un lien du réseau de transport.

On notera qu'un tunnel peut être vu comme une interface physique entre deux routeurs distants auquel est associé un niveau de sécurisation. Le procédé tel que décrit ci-dessus dans le premier mode de réalisation s'applique donc de façon équivalente.

De même, lors d'une modification de la table d'acheminement, le procédé effectue l'étape E6 pour chaque acheminement modifié.

L'étape E2 de transfert de la table 102 dans le plan de transfert est inchangée.

Le routeur 12 ajoute ainsi, avant l'étape F8, l'identifiant du tunnel sélectionné puis à l'étape F8, envoie le paquet sur le lien correspondant.

Le niveau de sécurisation peut être défini de façon implicite ou explicite de la même façon que dans les premier et deuxième modes de réalisation.

Ce troisième mode de réalisation est décrit pour des tunnels de type MPLS-TE. Il est également applicable à des tunnels GRE (pour "Generic Routine Encapsulation"), IPSec (pour "IP Security"), L2TP ("pour Layer Two Tunneling Protocol").

Un routeur 100 pour la mise en oeuvre du premier mode de réalisation du procédé de l'invention va maintenant être décrit en relation avec la figure 3. Le routeur 100 est un routeur du réseau de communication par paquet 1 supporté par un réseau de transport

Le routeur 100 est agencé pour recevoir, dans le plan de transfert, des paquets et pour les acheminer après traitement vers un lien du réseau de transport.

Il est également agencé pour recevoir des annonces de protocole de routage dans le plan de commande et pour élaborer une table d'acheminement des paquets.

Le routeur 100 comprend:
- une table d'acheminement non représentée sur la figure 3,
- une table 101 des liens du réseau de transport, agencée pour mémoriser pour chaque lien un niveau de sécurisation dans le réseau de transport,
- des moyens 104 d'établissement et de mise à jour d'une table 102, agencée pour mémoriser, pour un acheminement donné, des liens Ifp1-Ifp6 du réseau de transport aptes à assurer ledit acheminement et classés par niveau de sécurisation ;
- des moyens 106 de détermination à partir d'un paquet d'un niveau de sécurisation et d'un acheminement requis ;
- des moyens 108 de sélection dans la table 102 à partir du niveau de sécurisation et dé l'acheminement requis d'un lien Ifp1-Ifp6 dudit réseau de transport ;
- des moyens 110 d'acheminement de paquets sur un lien sélectionné par les moyens de sélection 108.

La table 102 est dupliquée dans le plan de commande et dans le plan de transfert.

Les modules 104, 106, 108 et 110 qui mettent en oeuvre le procédé précédemment décrit, sont de préférence des modules logiciels comprenant des instructions logicielles pour faire exécuter les étapes du procédé précédemment décrit par le routeur 100.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système dans un réseau de communication par paquets supporté par un réseau de transport, comprenant au moins un routeur 12 tel que décrit ci-dessus.

## Revendications

1. Procédé d'acheminement par un routeur (12) de paquets de données dans un réseau de communication par paquets (1) supporté par un réseau de transport, ledit procédé comprenant une étape de détermination (F4) à partir d'un paquet de données reçu par le routeur d'un niveau de sécurisation et d'un acheminement requis, **caractérisé en ce qu'**il comprend en outre :
- dans le plan de commande, une étape préalable (E1) d'établissement d'une table (102) mémorisant, pour un acheminement dans le réseau de communication par paquets donné, des liens (Ifp1-Ifp6) du réseau de transport aptes à assurer ledit acheminement et classés par niveau de sécurisation ;
- dans le plan de transfert,
- une étape (F6) de sélection dans la table, à partir du niveau de sécurisation et de l'acheminement requis déterminés à partir du paquet, d'un lien dudit réseau de transport
- une étape (F8) d'envoi par le routeur du paquet sur le lien sélectionné.

2. Procédé selon la revendication 1, dans lequel, lors de l'étape (E1) d'établissement de la table, pour un acheminement donné à effectuer par le routeur (12) dans le réseau de communication, le routeur détermine l'ensemble des liens du réseau de transport supportant ledit acheminement ainsi que les niveaux de sécurisation associés respectifs et associe dans la table à un niveau de sécurisation donné au moins un lien du réseau de transport correspondant.

3. Procédé selon la revendication 2, dans lequel, si aucun partage de charge n'est activé pour un niveau de sécurisation donné, l'étape (E1) d'établissement de tables comprend une étape (E14) de sélection aléatoire d'un lien dans le cas où le routeur a déterminé une pluralité de liens dans le réseau de transport.

4. Procédé selon l'une quelconque des revendications précédentes, dans lequel lorsque l'étape (F4) de détermination ne peut pas déterminer un niveau de sécurisation requis, on sélectionne au moins un lien du réseau de transport par défaut.

5. Procédé selon l'une quelconque des revendications précédentes, comprenant en outre lors d'une modification d'un acheminement, une étape (E6) de mise à jour de la table pour ledit acheminement.

6. Routeur de paquets de données dans un réseau de communication par paquets supporté par un réseau de transport, comprenant :
- des moyens (104) d'établissement dans le plan de commande d'une table (102), mémorisant pour un acheminement dans le réseau de communication par paquets donné, des liens (Ifp1-Ifp6) du réseau de transport aptes à assurer ledit acheminement et classés par niveau de sécurisation ;
- des moyens (106) de détermination dans le plan de transfert à partir d'un paquet de données reçu d'un niveau de sécurisation et d'un acheminement requis ;
- des moyens (108) de sélection dans la table (102) dans le plan de transfert à partir du niveau de sécurisation et de l'acheminement requis d'un lien (Ifp1-Ifp6) dudit réseau de transport ;
- des moyens d'envoi du paquet sur le lien sélectionné.

7. Système dans un réseau de communication par paquets supporté par un réseau de transport, comprenant au moins un routeur (12) selon la revendication 6.

8. Programme pour acheminer des paquets de données dans un réseau de communication par paquets supporté par un réseau de transport, pour un routeur (12), comprenant des instructions de programme destinées à commander l'exécution des étapes du procédé selon l'une quelconque des revendications 1 à 5 lorsque ledit programme est exécuté par le routeur.

9. Support d'enregistrement lisible par un routeur (12) sur lequel est enregistré le programme selon la revendication 8.

## Patentansprüche

1. Verfahren zur Weiterleitung von Datenpaketen durch einen Router (12) in einem durch ein Transportnetzwerk gestützten Paketnetzwerk (1), wobei das Verfahren einen Schritt der Bestimmung (F4) eines Sicherheitsniveaus und einer notwendigen Weiterleitung auf Basis eines vom Router empfangenen Datenpakets umfasst, **dadurch gekennzeichnet, dass** es ferner umfasst:
- auf Steuerungsebene einen vorherigen Schritt (E1) der Erstellung einer Tabelle (102), die für eine Weiterleitung in dem gegebenen Paketnetzwerk Verbindungen (Ifp1-Ifp6) des Transportnetzwerks speichert, die geeignet sind, die Weiterleitung zu gewährleisten, und die nach Sicherheitsniveaus eingeteilt sind;
- auf Weiterleitungsebene,
- einen Schritt (F6) der Auswahl einer Verbindung des Transportnetzwerks aus der Tabelle auf Basis des Sicherheitsniveaus und der notwendigen Weiterleitung, die nach dem Paket bestimmt werden,
- einen Schritt (F8) des Sendens des Pakets auf der ausgewählten Verbindung durch den Router.

2. Verfahren nach Anspruch 1, bei dem in dem Schritt (E1) der Erstellung der Tabelle für eine gegebene Weiterleitung, die vom Router (12) in dem Paketnetzwerk durchzuführen ist, der Router die Gesamtheit der Verbindungen des Transportnetzwerks, die die Weiterleitung stützen, sowie die jeweiligen zugehörigen Sicherheitsniveaus bestimmt und in der Tabelle einem gegebenen Sicherheitsniveau mindestens eine Verbindung des entsprechenden Transportnetzwerks zuordnet.

3. Verfahren nach Anspruch 2, bei dem, wenn für ein gegebenes Sicherheitsniveau keine Lastteilung aktiviert ist, der Schritt (E1) der Erstellung von Tabellen einen Schritt (E14) der zufälligen Auswahl einer Verbindung umfasst, falls der Router eine Vielzahl von Verbindungen in dem Transportnetzwerk bestimmt hat.

4. Verfahren nach einem der vorhergehenden Ansprüche, bei dem, wenn der Bestimmungsschritt (F4) kein erforderliches Sicherheitsniveau bestimmen kann, mindestens eine Standardverbindung des Transportnetzwerks ausgewählt wird.

5. Verfahren nach einem der vorhergehenden Ansprüche, ferner umfassend bei einer Änderung einer Weiterleitung einen Schritt (E6) der Aktualisierung der Tabelle für die Weiterleitung.

6. Router von Datenpaketen in einem durch ein Transportnetzwerk gestützten Paketnetzwerk, umfassend:
- Mittel (104) zur Erstellung auf Steuerungsebene einer Tabelle (102), die für eine Weiterleitung in dem gegebenen Paketnetzwerk Verbindungen (Ifp1-Ifp6) des Transportnetzwerks speichert, die geeignet sind, die Weiterleitung zu gewährleisten, und die nach Sicherheitsniveaus eingeteilt sind;
- Mittel (106) zur Bestimmung auf Weiterleitungsebene eines Sicherheitsniveaus und einer erforderlichen Weiterleitung aus einem empfangenen Datenpaket;
- Mittel (108) zur Auswahl einer Verbindung (Ifp1-Ifp6) des Transportnetzwerks aus der Tabelle (102) auf Weiterleitungsebene auf Basis des Sicherheitsniveaus und der notwendigen Weiterleitung;
- Mittel zum Senden des Pakets auf der ausgewählten Verbindung.

7. System in einem durch ein Transportnetzwerk gestützten Paketnetzwerk, umfassend mindestens einen Router (12) nach Anspruch 6.

8. Programm zur Weiterleitung von Datenpaketen in einem durch ein Transportnetzwerk gestützten Paketnetzwerk für einen Router (12), umfassend Programmbefehle, die dazu bestimmt sind, die Ausführung der Schritte des Verfahrens nach einem der Ansprüche 1 bis 5 zu steuern, wenn das Programm von dem Router ausgeführt wird.

9. Von einem Router (12) lesbarer Aufzeichnungsträger, auf dem das Programm nach Anspruch 8 aufgezeichnet ist.

## Claims

1. Method of routing by a router (12) of data packets in a packet communication network (1) supported by a transport network, said method comprising a step of determining (F4) on the basis of a data packet received by the router a security level and a routing required, **characterized in that** it furthermore comprises:
- in the control plane, a prior step (E1) of establishing a table (102) storing, for a routing in the given packet communication network, transport network links (Ifpl-Ifp6) able to ensure said routing and classed by security level;
- in the transfer plane,
- a step (F6) of selecting from the table, on the basis of the security level and of the routing required determined on the basis of the packet, a link of said transport network,
- a step (F8) of dispatching by the router of the packet on the selected link.

2. Method according to Claim 1, in which, during the step (E1) of establishing the table, for a given routing to be performed by the router (12) in the communication network, the router determines the set of links of the transport network supporting said routing as well as the respective associated security levels and associates in the table with a given security level at least one link of the corresponding transport network.

3. Method according to Claim 2, in which, if no load sharing is activated for a given security level, the step (E1) of establishing tables comprises a step (E14) of randomly selecting a link in the case where the router has determined a plurality of links in the transport network.

4. Method according to any one of the preceding claims, in which when the determining step (F4) cannot determine a required security level, at least one link of the transport network is selected by default.

5. Method according to any one of the preceding claims, furthermore comprising, upon a modification of a routing, a step (E6) of updating the table for said routing.

6. Router of data packets in a packet communication network supported by a transport network, comprising:
- means (104) for establishing in the control plane a table (102), storing for a routing in the given packet communication network, transport network links (Ifpl-Ifp6) able to ensure said routing and classed by security level;
- means (106) for determining in the transfer plane on the basis of a data packet received a security level and a routing required;
- means (108) for selecting from the table (102) in the transfer plane on the basis of the security level and of the routing required a link (Ifp1-Ifp6) of said transport network,
- means for dispatching the packet on the selected link.

7. System in a packet communication network supported by a transport network, comprising at least one router (12) according to Claim 6.

8. Program for routing data packets in a packet communication network supported by a transport network, for a router (12), comprising program instructions intended to control the execution of the steps of the method according to any one of Claims 1 to 5 when said program is executed by the router.

9. Recording medium readable by a router (12) on which the program according to Claim 8 is recorded.
